# EUROPÄISCHE PATENTSCHRIFT

(11) **EP 1 253 239 B1**
(45) Veröffentlichungstag und Bekanntmachung des Hinweises auf die Patenterteilung: **24.08.2005**
(21) Anmeldenummer: 02004466.5
(22) Anmeldetag: 27.02.2002
(51) Int. Cl.: D21D 5/26

(54) **Verfahren und Vorrichtung zum Entgasen von Faserstoffsuspension**
Method and device for degassing fibrous suspension
Procédé et dispositif de dégazage de suspension fibreuse

(30) Priorität: 27.04.2001 DE 10120885
(43) Veröffentlichungstag der Anmeldung: 30.10.2002
(73) Patentinhaber: Voith Paper Patent GmbH, 89522 Heidenheim (DE)
(72) Erfinder: Schwarz, Michael, Dr., 89522 Heidenheim (DE)

(56) Entgegenhaltungen:
- DE-A- 2 846 708
- US-A- 4 478 615
- US-A- 5 868 905

## Beschreibung

Die Erfindung betrifft ein Verfahren zum Entgasen von Faserstoffsuspension gemäß dem Oberbegriff des Anspruchs 1 und eine Vorrichtung zum Entgasen von Faserstoffsuspension gemäß dem Oberbegriff des Anspruchs 7.

Vorrichtungen zum Entgasen von Faserstoffsuspension sind den Fachleuten der Branche bestens bekannt und in einer Vielzahl von gewerblichen Schriften, wie beispielsweise in der DE 42 34 522 A1, in der DE 32 19 740 A1, in der WO 97/15717 A1 und in dem US-Patent 5,868,905, offengelegt. Ihrem Namen nach sollen die Vorrichtungen Faserstoffsuspension entgasen.

Die US 4,478,615 zeigt eine Vorrichtung zum Entgasen von Faserstoffsuspension, mit der ein Verfahren dieser Art durchführbar ist. Insbesondere wird in einem mit Vakuum beaufschlagten Behälter sowie in der daran angeschlossenen Abführleitung für die annähernd gasfreie Suspension jeweils der Druck gemessen und das Ist-Niveau im Behälter geregelt.

Die genannten Vorrichtungen sind große Behälter, denen die der Papier- oder Kartonmaschine aufzugebende gashaltige Faserstoffsuspension als dünnes Gemisch zugeführt wird. Das Funktionsprinzip der jeweiligen Vorrichtung besteht darin, die gashaltige Faserstoffsuspension unter Unterdruck sieden zu lassen und das Gas dadurch in einen sogenannten Gasraum und aus dem Behälter abzuscheiden. Die der Papier- oder Kartonmaschine zuzuführende Faserstoffsuspension wird dagegen durch eine Öffnung im Behälterboden entnommen, was natürlich mit dem Gedanken verbunden ist, möglichst gasfreie Faserstoffsuspension aus dem Behälter abzuleiten. Um die Entgasungsfähigkeit der Vorrichtung zu maximieren, wird im Behälter mittels einer Pumpe ein Unterdruck erzeugt, wobei das Gas durch eine Unterdruckpumpe (Vakuumpumpe) mit Leitung aus dem Behälter entweicht. Darüber hinaus wird die Entgasungsfähigkeit verbessert, indem die zugeführte, noch Gas enthaltende Faserstoffsuspension durch Strahlrohre oberhalb des Flüssigkeitsstands im Behälter eingegeben wird, wobei das in der zugegebenen Faserstoffsuspension eventuell als Blasen vorhandene Gas bereits abgeschieden wird, bevor die zugegebene Faserstoffsuspension mit der bereits vorhandenen Faserstoffsuspension in Verbindung kommt.

Ein Überlauf dient zur Stabilisierung des Flüssigkeitsstands im Behälter, wobei über dessen Kante im Regelfall ungefähr ein Teilstrom von zirka 10 % der in den Behälter eingebrachten Gesamtmenge fließt. Dabei ist von Nachteil, dass diese Überlaufmenge über lange Rohrleitungen wieder vor die Förderpumpe zur Zuführung von Faserstoffsuspension in den Behälter in den Kreislauf zurückgeführt wird. Zudem ist der Energieeinsatz des Systems um diese Überlaufmenge höher, als für die Entgasung der Gutstoffmenge (annähernd gasfreie Faserstoffsuspension) allein erforderlich ist. Überdies wird der Behälter selbst durch den zusätzlichen Überlauf größer und teurer.

Der Erfindung liegt die Aufgabe zugrunde, ein Verfahren und eine Vorrichtung der eingangs genannten Art zu schaffen, welche den bekannten Behälter kosten-, regelungs- und energieeffizienter betreibbar, konstruktiv einfacher und kostenmäßig günstig herstellbar machen und überdies die bekannten Nachteile des Stands der Technik vermeiden.

Diese Aufgabe wird bei einem Verfahren erfindungsgemäß durch die Merkmale im Kennzeichen des Anspruchs 1 gelöst.

Diese erfindungsgemäße Niveauregelung der Faserstoffsuspension im Behälter ermöglicht es, auf den bisherigen Überlauf gänzlich zu verzichten und das Entgasen von Faserstoffsuspension kosten-, regelungs- und energieeffizient zu machen. Ferner wird vorgeschlagen, dass der in der Abfuhrleitung herrschende Druck mittels eines dritten, dem zweiten in Strömungsrichtung der annähernd gasfreien Faserstoffsuspension nachgeordneten Drucktransmitters gemessen wird und dass über den geodätischen Unterschied zum zweiten Drucktransmitter in der Regelungseinheit eine Dichtekorrektur des berechneten Ist-Niveaus im Behälter durchgeführt wird.

Diese erweiterte Niveauregelung ermöglicht einerseits ein schnelleres und genaueres Regelungsverfahren, andererseits kann mit ihr die Dichte der Faserstoffsuspension und somit der Gasgehalt in der annähernd gasfreien Faserstoffsuspension überwacht werden.

Bei einer Veränderung des Werts für die Dichtekorrektur können erfindungsgemäß verschiedene Maßnahmen, allein oder in Kombination, ergriffen werden:
- im Behälter wird der herrschende Druck durch die Vakuumquelle verändert;
- das Ist-Niveau an Faserstoffsuspension im Behälter wird durch eine Drehzahlverstellung der Förderpumpe und/oder der Stoffauflaufpumpe verändert;
- die Durchsatzmenge an Faserstoffsuspension durch den Behälter wird durch eine Drehzahlverstellung der Förderpumpe und/oder der Stoffauflaufpumpe verändert;
   und
- die Verweilzeit der Fasertoffsuspension im Behälter wird durch eine Drehzahlverstellung der Förderpumpe und/oder der Stoffauflaufpumpe verändert.

Weiterhin wird erfindungsgemäß in Anlehnung an den bekannten Stand der Technik vorgeschlagen, dass überschüssige Faserstoffsuspension über einen im Behälter angebrachten Überlauf abgeschieden und in den Kreislauf zurückgeführt wird.

Diese Art der Abscheidung und Rückführung von Faserstoffsuspension eignet sich insbesondere dann, wenn verstärkt Faserstoffsuspension mit leichten Verunreinigungen vorliegt und diese Verunreinigungen auf günstige Weise beseitigt werden sollen.

Die erfindungemäße Niveauregelung kann selbstverständlich dafür herangezogen werden, den Volumenstrom an überschüssiger Faserstoffsuspension zu regeln, sei es durch Berechnung oder durch Messung.

Diese Aufgabe wird bei einer Vorrichtung erfindungsgemäß durch die Merkmale im Kennzeichen des Anspruchs 7 gelöst.

Dieser derart ausgebildete Behälter samt erfindungsgemäßer Niveauregelung ermöglicht es, auf den bisherigen Überlauf gänzlich zu verzichten und ihn dadurch konstruktiv einfacher und kostenmäßig günstig herstellbar zu machen. Ferner wird vorgeschlagen, dass in der Abfuhrleitung ein dritter, dem zweiten in Strömungsrichtung der annähernd gasfreien Faserstoffsuspension nachgeordneter Drucktransmitter zur Messung des herrschenden Drucks angebracht ist und dass die Regelungseinheit über den geodätischen Unterschied zum zweiten Drucktransmitter in der Regelungseinheit eine Dichtekorrektur des berechneten Ist-Niveaus im Behälter durchführt. Diese erweiterte Niveauregelung ermöglicht einerseits ein schnelleres und genaueres Regelungsverfahren, andererseits kann mit ihr die Dichte der Faserstoffsuspension und somit der Gasgehalt in der annähernd gasfreien Faserstoffsuspension überwacht werden.

Erfindungsgemäß wird zwecks Erreichung einer guten Dichtekorrektur vorgeschlagen, dass der geodätische Unterschied zwischen dem zweiten und dritten Drucktransmitter größer 1 m, vorzugsweise größer 5 m, insbesondere größer 10 m, ist.

Um nun optimale Voraussetzungen für einen gut funktionierenden Regelkreis zu erhalten, wird erfindungsgemäß vorgeschlagen, dass die Vakuumquelle aus einer Vakuumpumpe mit einer drehzahlregelbaren Antriebseinheit, insbesondere einem Elektromotor, besteht und dass die Förderpumpe und die Stoffauflaufpumpe eine drehzahlregelbare Antriebseinheit, insbesondere einen Elektromotor, aufweisen.

Weiterhin wird erfindungsgemäß vorgeschlagen, dass der Behälter einen Überlauf, vorzugsweise eine Trennwand, aufweist, über welche überschüssige Faserstoffsuspension abscheidbar und mittels mindestens einer Überlaufleitung in den Kreislauf zurückführbar ist.

Diese Art der Abscheidung und Rückführung von Faserstoffsuspension eignet sich insbesondere dann, wenn verstärkt Faserstoffsuspension mit leichten Verunreinigungen vorliegt und diese Verunreinigungen auf günstige Weise beseitigt werden sollen. Weitere Merkmale und Vorteile der Erfindung ergeben sich aus den Unteransprüchen und der nachfolgenden Beschreibung bevorzugter Ausführungsbeispiele unter Bezugnahme auf die Zeichnung.

Es zeigen:
- Figur 1:: eine schematische Vorrichtung zum Entgasen von Faserstoffsuspension gemäß dem bekannten Stand der Technik;
- Figur 2:: eine schematische Vorrichtung zum Entgasen von Faserstoffsuspension gemäß einer erfindungsgemäßen Ausführungsform.

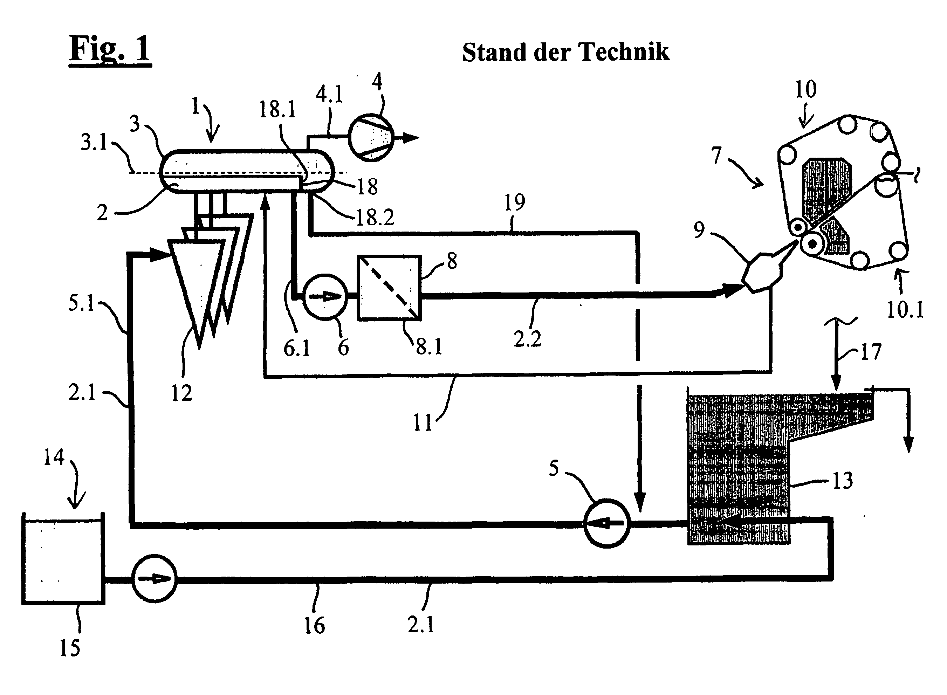

Die Figur 1 zeigt eine schematische Vorrichtung 1 zum Entgasen von Faserstoffsuspension 2 gemäß dem bekannten Stand der Technik. Die Vorrichtung 1 besteht aus einem, vorzugsweise langgestreckten und liegenden zylindrischen Behälter 3 mit einer horizontalen oder annähernd horizontalen Behälterachse 3.1, mindestens einer am Behälter 3 wirkenden Vakuumquelle 4 samt dazugehöriger Vakuumleitung 4.1, mindestens einer Zufuhrleitung 5.1 samt dazugehöriger Förderpumpe 5 zum Zuführen von gashaltiger Faserstoffsuspension 2.1 in den Behälter 3 und einer Abfuhrleitung 6.1 zum Abführen von annähernd gasfreier Faserstoffsuspension 2.2. in eine Stoffauflaufpumpe 6 und in nachfolgende Bereiche einer die annähernd gasfreie Faserstoffsuspension 2.2 verarbeitende Maschine 7, insbesondere eine Papier- oder Kartonmaschine. In der Figur 1 ist der Stoffauflaufpumpe 6 mittels der Abfuhrleitung 6.1 ein Sichter 8, vorzugsweise ein Vertikalsichter 8.1, nachgeschaltet, wobei die Abfuhrleitung 6.1 letztlich in einen Stoffauflauf 9, dem eine Siebpartie 10, in Figur 1 ein Doppelsiebformer 10.1, folgt, mündet. Eine Rückfuhrleitung 11 führt die im Stoffauflauf 9 anfallende überschüssige und annähernd gasfreie Faserstoffsuspension 2.2 in den Behälter 3 zurück. Die in den Behälter 3 mittels der Zufuhrleitung 5.1 samt dazugehöriger Förderpumpe 5 zugeführte gashaltige Faserstoffsuspension 2.1 ist unmittelbar vor dem Behälter 3 durch mindestens eine Cleaner-Stufe 12 geführt und aus einem Siebwasser-I-Behälter 13 entnommen. Gashaltige Faserstoffsuspension 2.1 ist dem Siebwasser-I-Behälter 13 über eine Leitung 16 aus der Stoffaufbereitung 14, exemplarisch durch die Maschinenbütte 15 dargestellt, und über eine Leitung 17 aus in der Siebpartie 10 anfallendes Siebwasser-I zugeführt.

Anzumerken ist, dass die Zufuhr der gashaltigen Faserstoffsuspension 2.1 auch seitlich in den Behälter 3 erfolgen kann, beispielsweise in der in der deutschen Offenlegungsschrift DE-A 17 61 496 (= US-Patent 3,538,680) offenbarten Weise. Gemäß dem bekannten Stand der Technik ist nun im Behälter 3 ein Überlauf 18, vorzugsweise in Form einer Trennwand 18.1, eingebaut, welche den Flüssigkeitsstand im Behälter 3 stabilisiert und zur Entfernung von auf der Flüssigkeitsoberfläche des Behälters 3 angesammelten leichten Verunreinigungen benutzt wird, damit sie nicht zur nachgeschalteten Maschine, insbesondere einer Papier- oder Kartonmaschine, gelangen. Die leichten Verunreinigungen fließen über den Überlauf 18 zum Ablauf 18.2 und anschließend über eine Leitung 19 zur Weiterbehandlung (Cleaner oder Sortierer), wo man bestrebt ist, sie aus der Faserstoffsuspension 2 abzuscheiden und die Faserstoffsuspension 2 in den Kreislauf zurückzuführen. In Figur 1 mündet die Leitung 19 vor der Förderpumpe 5 in die Zufuhrleitung 5.1.

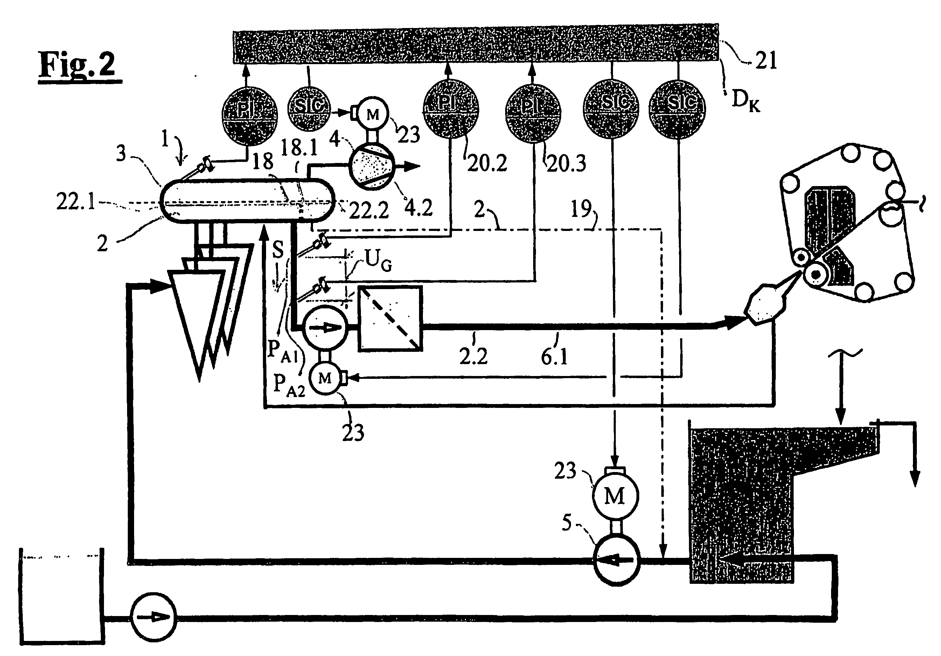

Die Figur 2 zeigt eine schematische Vorrichtung 1 zum Entgasen von Faserstoffsuspension 2 gemäß einer ersten erfindungsgemäßen Ausführungsform, wobei die genannte Vorrichtung 1 prinzipiell der Vorrichtung 1 der Figur 1 entspricht.

Deshalb wird hinsichtlich der ausführlichen Beschreibung auf die Figur 1 verwiesen.

Erfindungsgemäß ist nun vorgesehen, dass im Behälter 3 mindestens ein erster Drucktransmitter 20.1 zur Messung des von der Vakuumquelle 4 erzeugten Drucks p_{B} angebracht ist, dass in der Abfuhrleitung 6.1 ein zweiter Drucktransmitter 20.2 zur Messung des herrschenden Drucks p_{A1} angebracht ist, dass eine Regelungseinheit 21 zur Berechnung eines Ist-Niveaus 22.1 im Behälter 3 aus einem Differenzdruck Δp zwischen dem ersten und dem zweiten Drucktransmitter 20.1, 20.2 vorhanden ist und dass das berechnete Ist-Niveau 22.1 über eine Drehzahlverstellung der Förderpumpe 5 auf ein vorzugsweise konstantes Soll-Niveau 22.2 durch die Regelungseinheit 21 regelbar ist.

Dieser Behälter 3 samt erfindungsgemäßer Niveauregelung ermöglicht es, auf den bisherigen Überlauf 18 gemäß der Figur 1 gänzlich zu verzichten und ihn dadurch konstruktiv einfacher und kostenmäßig günstig herstellbar zu machen.

Erfindungsgemäß ist ferner vorgesehen, dass in der Abfuhrleitung 6.1 ein dritter, dem zweiten in Strömungsrichtung S (Pfeil) der annähernd gasfreien Faserstoffsuspension 2.2 nachgeordneten Drucktransmitter 20.3 zur Messung des herrschenden Drucks p_{A2} angebracht ist und dass die Regelungseinheit 21 über den geodätischen Unterschied U_{G} zum zweiten Drucktransmitter 20.2 in der Regelungseinheit 21 eine Dichtekorrektur D_{K} des berechneten Ist-Niveaus 22.1 im Behälter 3 durchführt.

Diese erweiterte Niveauregelung ermöglicht einerseits ein schnelleres und genaueres Regelungsverfahren, andererseits kann mit ihr die Dichte der Faserstoffsuspension und somit der Gasgehalt in der annähernd gasfreien Faserstoffsuspension überwacht werden.

Erfindungsgemäß ist der geodätische Unterschied U_{G} zwischen dem zweiten und dritten Drucktransmitter 20.2, 20.3 größer 1 m, vorzugsweise größer 5 m, insbesondere größer 10 m.

Weiterhin besteht die Vakuumquelle 4 aus einer Vakuumpumpe 4.2 mit einer drehzahlregelbaren Antriebseinheit 23, insbesondere einem Elektromotor, und die Förderpumpe 5 und die Stoffauflaufpumpe 6 weisen eine drehzahlregelbare Antriebseinheit 23, insbesondere einen Elektromotor, auf.

In besonderer Ausgestaltung (gestrichelte Darstellung) weist der Behälter 3 einen Überlauf 18, vorzugsweise eine Trennwand 18.1, auf, über welche überschüssige Faserstoffsuspension 2 abscheidbar und mittels mindestens einer Überlaufleitung 19 in den Kreislauf zurückführbar ist.

In der Figur 2 wurde auf die detaillierte Angabe von Leitungen und Verbindungen zwischen den einzelnen Komponenten des Regelkreises verzichtet, da sie zum bekannten Stand der Technik in der Regelungstechnik zählen und dem Fachmann ohnehin platt selbstverständlich sind. Ferner wurden bekannte Regelkomponenten, wie beispielsweise Pl (Pressure Indicated) oder SIC (Speed Indicated Control), nicht weiters erläutert und gekennzeichnet.

Die in der Figur 2 dargestellten erfindungsgemäßen Ausführungsformen einer Vorrichtung 1 zum Entgasen von Faserstoffsuspension 2 eignen sich in vorzüglicher Weise durch Durchführung des erfindungsgemäßen Verfahrens zum Entgasen von Faserstoffsuspension 2. Von einer weiteren Beschreibung des erfindungsgemäßen Verfahrens wird an dieser Stelle abgesehen und auf die allgemeine Beschreibung des erfindungsgemäßen Verfahrens verwiesen.

Zusammenfassend ist festzuhalten, dass durch die Erfindung ein Verfahren und eine Vorrichtung der eingangs genannten Art geschaffen wird, welche den bekannten Behälter kosten-, regelungs- und energieeffizienter betreibbar, konstruktiv einfacher und kostenmäßig günstig herstellbar machen und überdies die bekannten Nachteile des Stands der Technik vermeiden.

## Patentansprüche

1. Verfahren zum Entgasen von Faserstoffsuspension (2), die als gashaltige Faserstoffsuspension (2.1) mittels mindestens einer Förderpumpe (5) samt dazugehöriger Zufuhrleitung (5.1) in einen von mindestens einer Vakuumquelle (4) samt dazugehöriger Vakuumleitung (4.1) beaufschlagten Behälter (3) zum Entgasen gepumpt und anschließend als annähernd gasfreie Faserstoffsuspension (2.2) über eine Abfuhrleitung (6.1) einer Stoffauflaufpumpe (6) und nachfolgenden Bereichen einer die annähernd gasfreie Faserstoffsuspension (2.2) verarbeitende Maschine (7), insbesondere eine Papier- oder Kartonmaschine, zugeführt wird,
wobei im Behälter (3) der von der Vakuumquelle (4) erzeugte Druck (p_{B}) mittels mindestens eines ersten Drucktransmitters (20.1) gemessen wird,
wobei der in der Abfuhrleitung (6.1) herrschende Druck (p_{A1}) mittels eines zweiten Drucktransmitters (20.2) gemessen wird und
wobei über einen Differenzdruck (Δp) zwischen dem ersten und dem zweiten Drucktransmitter (20.1, 20.2) ein Ist-Niveau (22.1) im Behälter (3) mittels einer Regelungseinheit (21) berechnet wird,
**dadurch gekennzeichnet,**
**dass** das berechnete Ist-Niveau (22.1) über eine Drehzahlverstellung der Förderpumpe (5) auf ein vorzugsweise konstantes Soll-Niveau (22.2) durch die Regelungseinheit (21) geregelt wird,
**dass** der in der Abfuhrleitung (6.1) herrschende Druck (p_{A2}) mittels eines dritten, dem zweiten in Strömungsrichtung (S) der annähernd gasfreien Faserstoffsuspension (2.2) nachgeordneten Drucktransmitters (20.3) gemessen wird und
**dass** über den geodätischen Unterschied (U_{G}) zum zweiten Drucktransmitter (20.2) in der Regelungseinheit (21) eine Dichtekorrektur (D_{K}) des berechneten Ist-Niveaus (22.1) im Behälter (3) durchgeführt wird.

2. Verfahren nach Anspruch 1,
**dadurch gekennzeichnet,**
**dass** bei einer Veränderung des Werts für die Dichtekorrektur (D_{K}) der im Behälter (3) herrschende Druck (p_{B}) durch die Vakuumquelle (4) verändert wird.

3. Verfahren nach Anspruch 1 oder 2,
**dadurch gekennzeichnet,**
**dass** bei einer Veränderung des Werts für die Dichtekorrektur (D_{K}) das Ist-Niveau (22.1) an Faserstoffsuspension (2) im Behälter (3) durch eine Drehzahlverstellung der Förderpumpe (5) und/oder der Stoffauflaufpumpe (6) verändert wird.

4. Verfahren nach einem der vorhergehenden Ansprüche,
**dadurch gekennzeichnet,**
**dass** bei einer Veränderung des Werts für die Dichtekorrektur (D_{K}) die Durchsatzmenge an Faserstoffsuspension (2) durch den Behälter (3) durch eine Drehzahlverstellung der Förderpumpe (5) und/oder der Stoffauflaufpumpe (6) verändert wird.

5. Verfahren nach einem der vorhergehenden Ansprüche,
**dadurch gekennzeichnet,**
**dass** bei einer Veränderung des Werts für die Dichtekorrektur (D_{K}) die Verweilzeit der Faserstoffsuspension (2) im Behälter (3) durch eine Drehzahlverstellung der Förderpumpe (5) und/oder der Stoffauflaufpumpe (6) verändert wird.

6. Verfahren nach einem der vorhergehenden Ansprüche,
**dadurch gekennzeichnet,**
**dass** überschüssige Faserstoffsuspension (2) über einen im Behälter (3) angebrachten Überlauf (18) abgeschieden und in den Kreislauf zurückgeführt wird.

7. Vorrichtung (1) zum Entgasen von Faserstoffsuspension (2), bestehend aus
- einem, vorzugsweise langgestreckten und liegenden zylindrischen, Behälter (3) mit einer horizontalen oder annähernd horizontalen Behälterachse (3.1,
- mindestens einer am Behälter (3) wirkenden Vakuumquelle (4) samt dazugehöriger Vakuumleitung (4.1),
- mindestens einer Zufuhrleitung (5.1) samt dazugehöriger Förderpumpe (5) zum Zuführen von gashaltiger Faserstoffsuspension (2.1) in den Behälter (3), und
- einer Abfuhrleitung (6.1) zum Abführen von annähernd gasfreier Faserstoffsuspension (2.2) in eine Stoffauflaufpumpe (6) und in nachfolgende Bereiche einer die annähernd gasfreie Faserstoffsuspension (2.2) verarbeitende Maschine (7), insbesondere eine Papier- oder Kartonmaschine,
wobei im Behälter (3) mindestens ein erster Drucktransmitter (20.1) zur Messung des von der Vakuumquelle (4) erzeugten Drucks (p_{B}) angebracht ist,
wobei in der Abfuhrleitung (6.1) ein zweiter Drucktransmitter (20.2) zur Messung des herrschenden Drucks (p_{A1}) angebracht ist und
wobei eine Regelungseinheit (21) zur Berechnung eines Ist-Niveaus (22.1) im Behälter (3) aus einem Differenzdruck (Δp) zwischen dem ersten und dem zweiten Drucktransmitter (20.1, 20.2) vorhanden ist,
**dadurch gekennzeichnet,**
**dass** das berechnete Ist-Niveau (22.1) über eine Drehzahlverstellung der Förderpumpe (5) auf ein vorzugsweise konstantes Soll-Niveau (22.2) durch die Regelungseinheit (21) regelbar ist,
**dass** in der Abfuhrleitung (6.1) ein dritter, dem zweiten (20.2) in Strömungsrichtung (S) der annähernd gasfreien Faserstoffsuspension (2.2) nachgeordneter Drucktransmitter (20.3) zur Messung des herrschenden Drucks (P_{A2}) angebracht ist und
**dass** die Regelungseinheit (21) über den geodätischen Unterschied (U_{G}) zum zweiten Drucktransmitter (20.2) in der Regelungseinheit (21) eine Dichtekorrektur (D_{K}) des berechneten Ist-Niveaus (22.1) im Behälter (3) durchführt.

8. Vorrichtung (1) nach Anspruch 7,
**dadurch gekennzeichnet,**
**dass** der geodätische Unterschied (U_{G}) zwischen dem zweiten und dritten Drucktransmitter (20.2, 20.3) größer 1 m, vorzugsweise größer 5 m, insbesondere größer 10 m, ist.

9. Vorrichtung (1) nach einem der Ansprüche 7 bis 8,
**dadurch gekennzeichnet,**
**dass** die Vakuumquelle (4) aus einer Vakuumpumpe (4.2) mit einer drehzahlregelbaren Antriebseinheit (23), insbesondere einem Elektromotor, besteht.

10. Vorrichtung (1) nach einem der Ansprüche 7 bis 9,
**dadurch gekennzeichnet,**
**dass** die Förderpumpe (5) und die Stoffauflaufpumpe (6) eine drehzahlregelbare Antriebseinheit (23), insbesondere einen Elektromotor, aufweisen.

11. Vorrichtung (1) nach einem der Ansprüche 7 bis 10,
**dadurch gekennzeichnet,**
**dass** der Behälter (3) einen Überlauf (18), vorzugsweise eine Trennwand (18.1), aufweist, über welchen überschüssige Faserstoffsuspension (2) abscheidbar und mittels mindestens einer Überlaufleitung (19) in den Kreislauf zurückführbar ist.

## Claims

1. A method for degassing pulp suspension (2) which is pumped as a gas-containing pulp suspension (2.1) by means of at least one conveying pump (5) and associated feed line (5.1) into a vessel (3) acted upon by at least one vacuum source (4) and associated vacuum line (4.1) for degassing and then is supplied as an approximately gas-free pulp suspension (2.2) via a discharge line (6.1) to a headbox pump (6) and
to following regions of a machine (7) processing the approximately gas-free pulp suspension (2.2), particularly a paper-making or card-making machine,
wherein in the vessel (3) the pressure (p_{B}) produced by the vacuum source (4) is measured by means of at least one first pressure transmitter (20.1), the pressure (p_{A1}) prevailing in the discharge line (6.1) being measured by means of a second pressure transmitter (20.2) and
wherein an actual level (22.1) in the vessel (3) is calculated by means of a regulating unit (21) via a differential pressure (Δp) between the first and the second pressure transmitter (20.1, 20.2),
**characterised in that**
the calculated actual level (22.1) is regulated to a preferably constant desired level (22.2) by the regulating unit (21) by adjusting the speed of the feed pump (5),
the pressure (p_{A2}) prevailing in the discharge line (6.1) is measured by means of a third pressure transmitter (20.3), succeeding the second in the direction of flow (S) of the approximately gas-free pulp suspension (2.2) and
a density correction (D_{K}) of the calculated actual level (22.1) in the vessel (3) is performed by means of the geodetic difference (U_{G}) from the second pressure transmitter (20.2) in the regulating unit (21).

2. A method according to Claim 1,
**characterised in that**
upon a change in the value for the density correction (D_{K}) the pressure (p_{B}) prevailing in the vessel (3) is changed by the vacuum source (4).

3. A method according to Claim 1 or 2,
**characterised in that**
upon a change in the value for the density correction (D_{K}) the actual level (22.1) of pulp suspension (2) in the vessel (3) is changed by adjusting the speed of the conveying pump (5) and/or of the headbox pump (6).

4. A process according to one of the preceding claims,
**characterised in that**
upon a change in the value for the density correction (D_{K}) the throughput rate of pulp suspension (2) through the vessel (3) is changed by adjusting the speed of the conveying pump (5) and/or of the headbox pump (6).

5. A process according to one of the preceding claims,
**characterised in that**
upon a change in the value for the density correction (D_{K}) the dwell time of the pulp suspension (2) in the vessel (3) is changed by adjusting the speed of the conveying pump (5) and/or of the headbox pump (6).

6. A process according to one of the preceding claims,
**characterised in that**
excess pulp suspension (2) is separated off via an overflow (18) provided in the vessel (3) and is recirculated.

7. A device (1) for degassing pulp suspension (2), consisting of
- a preferably elongate and horizontal cylindrical vessel (3) with a horizontal or approximately horizontal vessel axis (3.1),
- at least one vacuum source (4) and associated vacuum line (4.1) acting on the vessel (3),
- at least one feed line (5.1) and associated conveying pump (5) for supplying gas-containing pulp suspension (2.1) into the vessel (3), and
- a discharge line (6.1) for discharging approximately gas-free pulp suspension (2.2) into a headbox pump (6) and into subsequent regions of a machine (7) processing the approximately gas-free pulp suspension (2.2), particularly a paper-making or card-making machine,
wherein at least one first pressure transmitter (20.1) for measuring the pressure (p_{B}) generated by the vacuum source (4) is provided in the vessel (3), with a second pressure transmitter (20.2) for measuring the prevailing pressure (p_{A1}) being provided in the discharge line (6.1) and
wherein a regulating unit (21) for calculating an actual level (22.1) in the vessel (3) from a differential pressure (Δp) is present between the first and second pressure transmitters (20.1, 20.2),
**characterised in that**
the calculated actual level (22.1) can be regulated to a preferably constant desired level (22.2) by the regulating unit (21) by adjusting the speed of the conveying pump (5),
a third pressure transmitter (20.3), succeeding the second pressure transmitter (20.2) in the direction of flow (S) of the approximately gas-free pulp suspension (2.2) is provided in the discharge line (6.1) for measuring the prevailing pressure (p_{A2}), and
the regulating unit (21) performs a density correction (D_{K}) of the calculated actual level (22.1) in the vessel (3) by means of the geodetic difference (U_{G}) from the second pressure transmitter (20.2) in the regulating unit (21).

8. A device according to Claim 7,
**characterised in that**
the geodetic difference (U_{G}) between the second and third pressure transmitters (20.2, 20.3) is greater than 1 m, preferably greater than 5 m, particularly greater than 10 m.

9. A device (1) according to one of Claims 7 to 8,
**characterised in that**
the vacuum source (4) consists of a vacuum pump (4.2) with a drive unit (23) of adjustable speed, particularly an electric motor.

10. A device (1) according to one of Claims 7 to 9,
**characterised in that**
the conveying pump (5) and the headbox pump (6) have a drive unit (23) of adjustable speed, particularly an electric motor.

11. A device (1) according to one of Claims 7 to 10,
**characterised in that**
the vessel (3) has an overflow (18), preferably a partition (18.1), via which excess pulp suspension (2) can be separated off and can be recirculated by means of at least one overflow line (19).

## Revendications

1. Procédé de dégazage d'une suspension fibreuse (2) qui est pompée en vue du dégazage, en tant que suspension fibreuse (2.1) chargée en gaz, au moyen d'au moins une pompe de refoulement (5) coopérant avec un conduit d'amenée (5.1) associé, dans un récipient (3) sollicité par au moins une source de dépression (4) coopérant avec un conduit de dépression (4.1) associé, puis est délivrée en tant que suspension fibreuse (2.2) approximativement exempte de gaz, par l'intermédiaire d'un conduit d'évacuation (6.1), à une pompe (6) d'amenée de matière et à des régions successives d'une machine (7), notamment une machine à papier ou à carton traitant la suspension fibreuse (2.2) approximativement exempte de gaz, procédé dans lequel la pression (p_{B}) engendrée par la source de dépression (4) est mesurée, dans le récipient (3), au moyen d'au moins un premier transmetteur de pression (20.1) ;
dans lequel la pression (p_{A1}) régnant dans le conduit d'évacuation (6.1) est mesurée au moyen d'un deuxième transmetteur de pression (20.2) ; et
dans lequel un niveau réel (22.1) situé dans le récipient (3) est calculé, au moyen d'une unité de régulation (21), sur la base d'une pression différentielle (Δp) entre les premier et deuxième transmetteurs de pression (20.1, 20.2),
**caractérisé en ce que**
le niveau réel (22.1) calculé est régulé par l'intermédiaire de l'unité de régulation (21), au moyen d'un réglage de la vitesse angulaire de la pompe de refoulement (5), jusqu'à un niveau de consigne (22.2) de préférence constant ;
la pression (p_{A2}), régnant dans le conduit d'évacuation (6.1), est mesurée au moyen d'un troisième transmetteur de pression (20.3) placé en aval du deuxième transmetteur dans la direction d'écoulement (S) de la suspension fibreuse (2.2) approximativement exempte de gaz ; et
une correction de densité (D_{K}); du niveau réel (22.1) calculé dans le récipient (3) est exécutée, dans l'unité de régulation (21), sur la base de la différence géodésique (U_{G}) vis-à-vis du deuxième transmetteur de pression (20.2).

2. Procédé selon la revendication 1,
**caractérisé en ce que**
lors d'une variation de la valeur affectée à la correction de densité (D_{K}), la pression (p_{B}) régnant dans le récipient (3) est modifiée par l'intermédiaire de la source de dépression (4).

3. Procédé selon la revendication 1 ou 2,
**caractérisé en ce que**
lors d'une variation de la valeur affectée à la correction de densité (D_{K}), le niveau réel (22.1) de la suspension fibreuse (2), dans le récipient (3), est modifié par un réglage de la vitesse angulaire de la pompe de refoulement (5) et/ou de la pompe (6) d'amenée de matière.

4. Procédé selon l'une des revendications précédentes,
**caractérisé en ce que**
lors d'une variation de la valeur affectée à la correction de densité (D_{K}), le débit de suspension fibreuse (2) parcourant le récipient (3) est modifié par un réglage de la vitesse angulaire de la pompe de refoulement (5) et/ou de la pompe (6) d'amenée de matière.

5. Procédé selon l'une des revendications précédentes,
**caractérisé en ce que**
lors d'une variation de la valeur affectée à la correction de densité (D_{K}), la durée de séjour de la suspension fibreuse (2), dans le récipient (3), est modifiée par un réglage de la vitesse angulaire de la pompe de refoulement (5) et/ou de la pompe (6) d'amenée de matière.

6. Procédé selon l'une des revendications précédentes,
**caractérisé en ce que**
la suspension fibreuse (2) excédentaire est évacuée par l'intermédiaire d'un trop-plein (18) situé dans le récipient (3), puis est renvoyée vera le circuit.

7. Dispositif (1) de dégazage d'une suspension fibreuse (2), comprenant
- un récipient cylindrique (3), de préférence allongé et couché, présentant un axe (3.1) horizontal ou approximativement horizontal,
- au moins une source de dépression (4) agissant dans le récipient (3) en coopération avec un conduit de dépression (4.1) associé,
- au moins un conduit d'amenée (5.1) coopérant avec une pompe de refoulement (5) associée pour introduire, dans le récipient (3), une suspension fibreuse (2.1) chargée en gaz, et
- un conduit d'évacuation (6.1) pour évacuer une suspension fibreuse (2.2), approximativement exempte de gaz, dans une pompe (6) d'amenée de matière et dans des régions successives d'une machine (7), notamment une machine à papier ou à carton traitant ladite suspension fibreuse (2.2) approximativement exempte de gaz,
dispositif dans lequel le récipient (3) renferme au moins un premier transmetteur de pression (20.1), pour mesurer la pression (p_{B}) engendrée par la source de dépression (4) ;
dans lequel le conduit d'évacuation (6.1) renferme un deuxième transmetteur de pression (20.2) pour mesurer la pression régnante (p_{A1}), et
dans lequel une unité de régulation (21) est présente pour calculer un niveau réel (22.1), dans le récipient (3), sur la base d'une pression différentielle (Δp) entre les premier et deuxième transmetteurs de pression (20.1, 20.2),
**caractérisé en ce que**
le niveau réel (22.1) calculé peut être régulé par l'intermédiaire de l'unité de régulation (21), au moyen d'un réglage de la vitesse angulaire de la pompe de refoulement (5), jusqu'à un niveau de consigne (22.2) de préférence constant ;
le conduit d'évacuation (6.1) renferme un troisième transmetteur de pression (20.3) placé en aval du deuxième transmetteur (20.2) dans la direction d'écoulement (S) de la suspension fibreuse (2.2) approximativement exempte de gaz, afin de mesurer la pression, régnante (p_{A2}) ; et
l'unité de régulation (21) effectue une correction de densité (D_{K}) du niveau réel (22.1) calculé dans le récipient (3), sur la base de la différence géodésique (U_{G}) vis-à-vis du deuxième transmetteur de pression (20.2) dans l'unité de régulation (21).

8. Dispositif (1) selon la revendication 7,
**caractérisé en ce que**
la différence géodésique (U_{G}) entra les deuxième et troisième transmetteurs de pression (20.2, 20.3) est supérieure à 1 m, de préférence supérieure à 5 m, notamment supérieure à 10 m.

9. Dispositif (1) selon l'une des revendications 7 à 8,
**caractérisé en ce que**
la source de dépression (4) est constituée d'une pompe à vide (4.2) équipée d'une unité d'entraînement (23), notamment d'un moteur électrique, dont la vitesse angulaire peut être régulée.

10. Dispositif (1) selon l'une des revendications 7 à 9,
**caractérisé en ce que**
la pompe de refoulement (5) et la pompe (6) d'amenée de matière comportent une unité d'entraînement (23), notamment un moteur électrique, dont la vitesse angulaire peut être régulée.

11. Dispositif (1) selon l'une des revendications 7 à 10,
**caractérisé en ce que**
le récipient (3) présente un trop-plein (18), de préférence une cloison séparatrice (18.1), par l'intermédiaire duquel une suspension fibreuse (2) excédentaire peut être évacuée et peut être renvoyée dans le circuit au moyen d'au moins un conduit de trop-plein (19).
